# EUROPEAN PATENT APPLICATION

(11) **EP 2 814 219 A1**
(43) Date of publication of application: **17.12.2014**
(21) Application number: 14170252.2
(22) Date of filing: 28.05.2014
(51) Int. Cl.: H04L 29/06, H04L 12/24, H04L 29/08, G06F 21/10

(54) **Setting-data encrypting apparatus, information processing apparatus, setting changing method, setting-data encrypting program, and setting changing program**

(30) Priority: 05.06.2013 JP 2013118892
(71) Applicant: FUJITSU LIMITED, Kawasaki-shi, Kanagawa 211-8588 (JP)
(72) Inventor: Endo, Go, Kanagawa, 211-8588 (JP); Sawada, Yusuke, Kanagawa, 211-8588 (JP)
(74) Representative: Hoffmann Eitle

(57) **Abstract**

A setting-data encrypting apparatus comprising includes an input device, a encrypting unit, and an output device. Setting data is input from the input unit. The setting data indicates a detail to be newly set to an information processing apparatus whose performance-related setting is to be changed. The encrypting unit encrypts the setting data input via the input unit. And the output unit outputs encrypted data in a character string format.

## Description

### FIELD

The embodiments discussed herein are related to a technology for changing a setting related to a performance of an information processing apparatus such as a server.

### BACKGROUND

Currently, some makers that sell or rent information processing apparatuses such as servers (hereinafter referred to as "servers") provide servers whose settings related to performance are changeable. The settings related to performance include the number of CPUs (Central Processing Units) actually operated on a server, the amount of available memory, the enabling or disabling of an option function, and so on.

Makers that provide such a server whose settings are changeable ordinarily charge fees in accordance with the settings. A "setting" hereinafter refers to a factor related to performance that changes a price (selling price or rental fee (fee for use)), unless otherwise noted. Setting data will hereinafter be referred to as "model lock data".

A customer who uses a server whose settings are changeable may change a setting in accordance with a performance that the server to have. As an example, in one measure, the customer may suppress the amount of payment by selecting a low-performance setting when a relatively small amount of data is predicted to be processed, and may select a higher-performance setting when the amount of data to be processed increases. Alternately, the customer may take the opposite measure. A performance may be changed by changing a setting, and hence the server itself would not be changed. Accordingly, a server whose settings are changeable allows a customer to suppress the amount of payment and is capable of performing desired data processing, thereby offering high convenience. An amount paid by a customer will hereinafter be referred to as a "fee for use" for convenience.

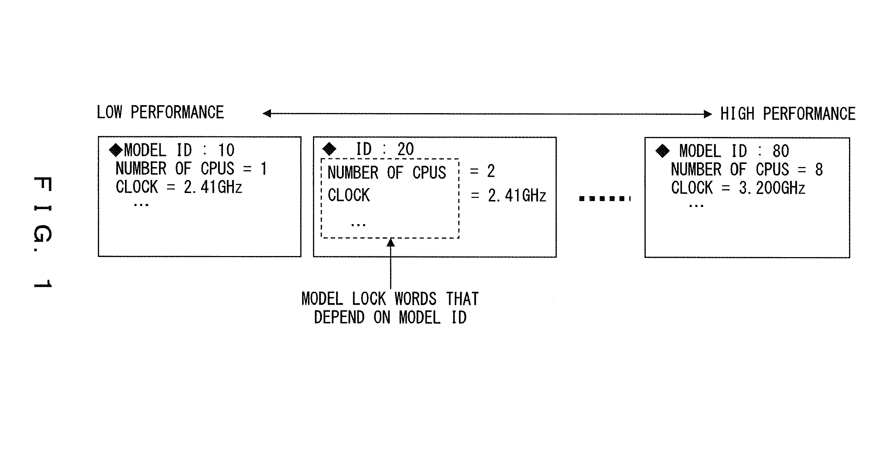

FIG. 1 illustrates examples of model lock data. Model lock data 1 (1-1 to 1-8) in FIG. 1 is intended to change a plurality of setting items. FIG. 1 indicates only "model ID", "number of CPUs", and "clock" as setting items. The setting items are indicated as "model lock words".

The "model ID" is a model lock word (setting item) for roughly grading a performance. In FIG. 1, a model ID of a higher value leads to a higher performance. The "number of CPUs" is a model lock word that designates the number of CPUs actually operated, and the "clock" is a model lock word that designates a clock frequency at which a CPU is operated.

The model lock data 1 depicted in FIG. 1 not only relates to a fee for use collected from a customer but also directly affects a performance of a server used by the customer. Thus, the model lock data 1 is confidential. Accordingly, the model lock data 1 is encrypted before being input to a server.

For encryption of the model lock data 1, a common key cryptography is typically used wherein the same key is also used for decoding. Unique information that is different for each server is usually used as a key. Hence, only an objective server can change a setting indicated by encrypted model lock data 1 without a key being input.

The maker encrypts the model lock data 1. A server used by a customer is not necessarily located within a facility managed by the maker (e.g. , data center). The server is not necessarily connected to a maker-side terminal apparatus via a network. Maker-side terminal apparatuses are not used for management of the server or the like, and hence there is very little need to connect such terminal apparatuses to the server. In some cases, the server is not connected to any external element. Accordingly, the actual situation is that a network environment is expectable wherein a maker-side terminal apparatus is connectable to the server.

A customer engineer (CE) inputs model lock data to the server partly because such a network environment is unexpectable. Encrypted model lock data 1 is expressed using binary numbers and has a large bit count. Hence, a typical way to input encrypted model lock data 1 is to record the encrypted model lock data 1 in a portable recording medium and cause the server to read the recording medium.

To cause the server to read the recording medium in which the encrypted model lock data 1 is recorded, the maker prepares and delivers the recording medium. Alternatively, the maker transmits encrypted model lock data 1 via a network to a terminal apparatus operated by the CE, and the received model lock data 1 is written to a recording medium accessible from the terminal apparatus. However, in both of the methods, it may be difficult to quickly change a setting of the server.

In the method wherein the maker prepares a recording medium, it takes time to deliver the recording medium, thereby making it difficult to quickly change a setting of the server. In the method wherein model lock data 1 is transmitted via a network, the model lock data 1 may be incapable of being transmitted via the network. It is also possible that the CE does not have a terminal apparatus capable of accessing a recording medium that the server can read, or that an available recording medium is not present. Both of these possibilities hinder the quick changing of a setting of the server.

A customer may possibly request that a setting of a server be urgently changed. In consideration of the possibility, it is important to ensure that the settings of a server can be changed quickly.
Patent document 1: Japanese Laid-open Patent Publication No. 2003-303028
Patent document 2: Japanese Laid-open Patent Publication No. 2007-11944

### SUMMARY

Accordingly, it is an object in one aspect of the invention to provide a technology for ensuring that settings related to a performance of an information processing apparatus (e.g., a server) are quickly changed.

One system to which the invention has been applied includes an input device, a encrypting unit, and an output device. Setting data is input from the input unit. The setting data indicates a detail to be newly set to an information processing apparatus whose performance-related setting is to be changed. The encrypting unit encrypts the setting data input via the input unit. And the output unit outputs encrypted data in a character string format.

Applying the invention ensures that settings related to a performance of an information processing apparatus (e.g., a server) are quickly changed.

### BRIEF DESCRIPTION OF DRAWINGS

FIG. 1 illustrates examples of model lock data;
FIG. 2 illustrates a method for changing a setting related to a performance of an information processing apparatus, the method being achieved in accordance with the embodiment;
FIG. 3 is a flowchart illustrating an exemplary sequence of an operation of changing a setting related to a performance of an information processing apparatus in accordance with the embodiment;
FIG. 4 illustrates an exemplary functional configuration of a setting-data encrypting apparatus in accordance with the embodiment;
FIG. 5 illustrates an exemplary functional configuration of a CL apparatus that is an information processing apparatus in accordance with the embodiment;
FIG. 6 illustrates examples of a selection screen and a PMLKD entry screen, both displayed by a CL apparatus;
FIG. 7 illustrates an exemplary change-history screen;
FIG. 8 is a flowchart of a data creating process;
FIG. 9 is a flowchart of an updating process;
FIG. 10 illustrates an exemplary configuration of an information processing apparatus usable as a setting-data encrypting apparatus in accordance with the embodiment; and
FIG. 11 illustrates an exemplary configuration of a CL apparatus that is an information processing apparatus in accordance with the embodiment.

### DESCRIPTION OF EMBODIMENTS

The following will describe embodiments of the invention in detail by referring to the drawings.

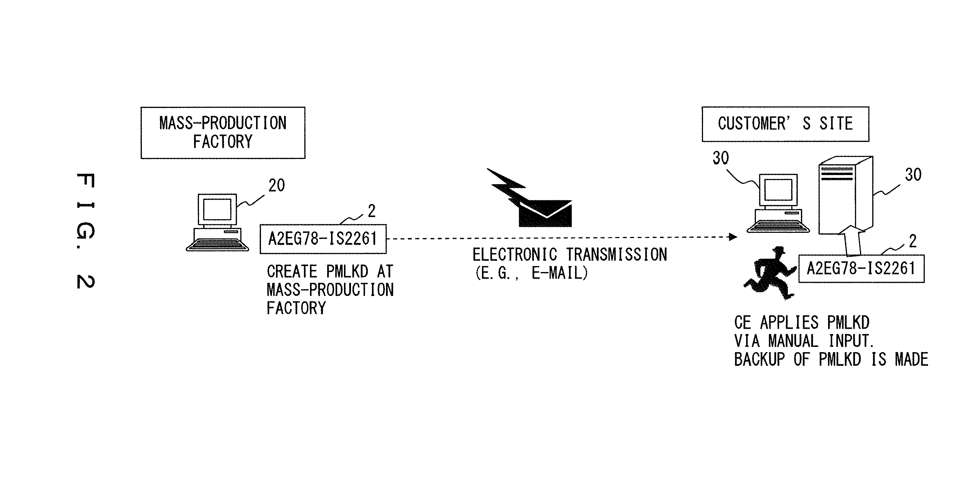

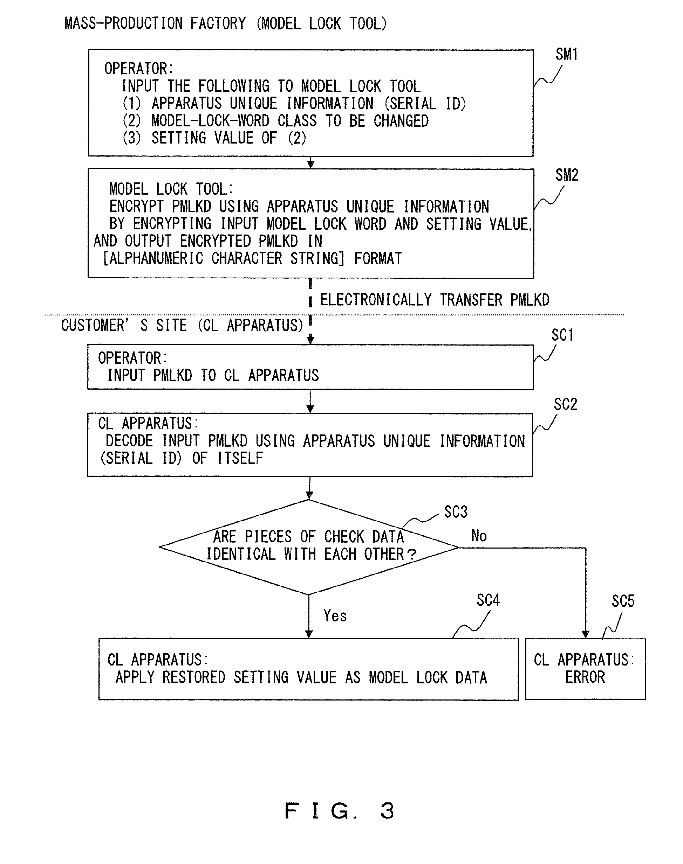

FIG. 2 illustrates a method for changing a setting related to a performance of an information processing apparatus, the method being achieved in accordance with the embodiment. FIG. 3 is a flowchart illustrating an exemplary sequence of an operation of changing a setting related to a performance of an information processing apparatus in accordance with the embodiment. First, with reference to FIGS. 2 and 3, specific descriptions will be given of a changing method achieved by the embodiment and a sequence of an operation of achieving the changing method.

In FIG. 2, numeral 20 indicates a terminal apparatus (e.g., PC (Personal Computer)) installed in a mass-production factory where a maker manufactures information processing apparatuses, and numeral 30 indicates an information processing apparatus delivered to a customer. The terminal apparatus 20 is an information processing apparatus mounted with a setting-data encrypting apparatus in accordance with the embodiment, and the information processing apparatus 30 is an information processing apparatus in accordance with the embodiment. The information processing apparatus 30 fabricated by the maker will hereinafter be referred to as a "CL apparatus". Note that "CL" means "Client".

At a request from the customer, an operator who operates the terminal apparatus 20 in the mass-production factory creates model lock data. The embodiment is based on the premise that, as depicted in FIG. 1, a plurality of model lock words (items) are present as model lock data.

In the embodiment, an operator (CE) can manually change a setting of the CL apparatus 30. In the embodiment, a setting can be changed for each model lock word so that the amount of data manually input by the operator can be minimized. "PMLKD" in FIG. 2, which indicates Partial Model Lock DATA, is data for changing the setting of one model lock word.

To enable a setting to be changed for each model lock word, a PMLKD specify a corresponding model lock word. Accordingly, in the embodiment, data indicating a model lock word (hereinafter referred to as "model-lock-word class data") and data indicating the setting of the model lock word (hereinafter referred to as a "setting value") are gathered and encrypted.

Numeral 2 in FIG. 2 indicates an encrypted PMLKD or, more precisely, a PMLKD output from the terminal apparatus 20. "A2EG78-IS2261" indicates as examples the details of a PMLKD2 that has been output. Note that numeral 2 is assigned only to a PMLKD in a character string format.

For encryption, a common key cryptography is typically used wherein the same key is also used for decoding. Unique information that is different for each CL apparatus 30 is used as a key. The following descriptions are based on the assumption that serial IDs (IDentifers) serve as the unique information.

As depicted in FIG. 2, in the embodiment, a PMLKD 2 is output in a character string format (in this example, alphanumeric character string format). This is attributed to the advantages of a small number of digits (characters) and easy recognition of details in comparison with data expressed as binary numbers. These advantages allow the PMLKD 2 to be correctly and quickly input in a manual manner. Allowing a setting to be changed for each model lock word has the advantage of decreasing the number of characters of the PMLKD 2.

A PMLKD 2 is output using a data representation that can be easily input in a manual manner, thereby decreasing the case to record the PMLKD 2 in a recording medium. This is because information indicating the PMLKD 2 can be transmitted to an operator who is in charge of the changing of a setting of a customer CL apparatus 30, so that the operator can appropriately change the setting of the CL apparatus 30.

To transmit information indicating the PMLKD2, various electronic transmission techniques are useable. In addition to e-mail, telephone, facsimile, and so on are usable as the electronic transmission techniques. In this way, an increased number of options are available in the transmitting of information, so that a maker (or a vendor) can select a proper option in accordance with a customer. Such an improvement in convenience ensures that information is quickly transmitted to an operator at a customer's site. Information to be transmitted is data in a character string format, which has a small number of digits and is easily recognized in comparison with data expressed as binary numbers. This allows a setting of the CL apparatus 30 to be quickly and correctly changed at a request from a customer.

The sequence of the operation represented in FIG. 3 enables changing a setting of the CL apparatus 30 through creation of a PMLKD 2.

The terminal apparatus 20 stores a program used to create a PMLKD 2 (hereinafter referred to as a "model lock tool"). To create a PMLKD 2, the operator causes the terminal apparatus 20 to execute the model lock tool so as to input data to create a PMLKD 2 (SM2). Data to be input (or designated) by the operator at least includes unique information (serial ID) assigned to an objective CL apparatus 30, the class of an objective model lock word, and a setting value indicating a detail to be newly set by that class of model lock word. In the embodiment, the terminal apparatus 20 also adds a dummy and check data set by a password of the terminal apparatus 20. A model-lock-word class and a setting value is to be input for each model lock word. Check data is used to check whether an error has occurred in a data constellation of a dummy, model-lock-data class data, and setting-value data. A dummy, which is data used to improve confidentiality, makes it more difficult to guess a model lock word and a setting value thereof.

Inputting all data that to be input (designated), the operator instructs the model lock tool to create a PMLKD 2. In accordance with the instruction, the terminal apparatus 20 that executes the model lock tool gathers and encrypts, for each model lock word, model-lock-word class data and setting-value data of the model lock word by using input unique information, and outputs the resultant data in a character string format (SM2).

The PMLKD 2 output in a character string format is reported by a mass-production factory operator (e.g., an operator who operates the terminal apparatus 20) to an operator at a customer's site using e-mail, telephone, facsimile, or the like.

The operator at a customer's site manually inputs the reported PMLKD 2 to the CL apparatus 30 and orders application of the PMLKD 2 (SC1). In response to the order, the CL apparatus 30 decodes the input PMLKD 2 using the serial ID of itself (SC2) . After the decoding, the CL apparatus 30 determines whether the decoded check data is identical with the check data obtained from the decoded dummy, the decoded model-lock-data class data, and the decoded setting-value data (SC3). When those pieces of check data are identical with each other (Yes in SC3), the CL apparatus 30 changes a setting in accordance with the input PMLKD 2 (SC4). When those pieces of check data are not identical with each other (No in SC3), the CL apparatus 30 reports to the operator that an error has occurred, without changing a setting in accordance with the input PMLKD 2 (SC5).

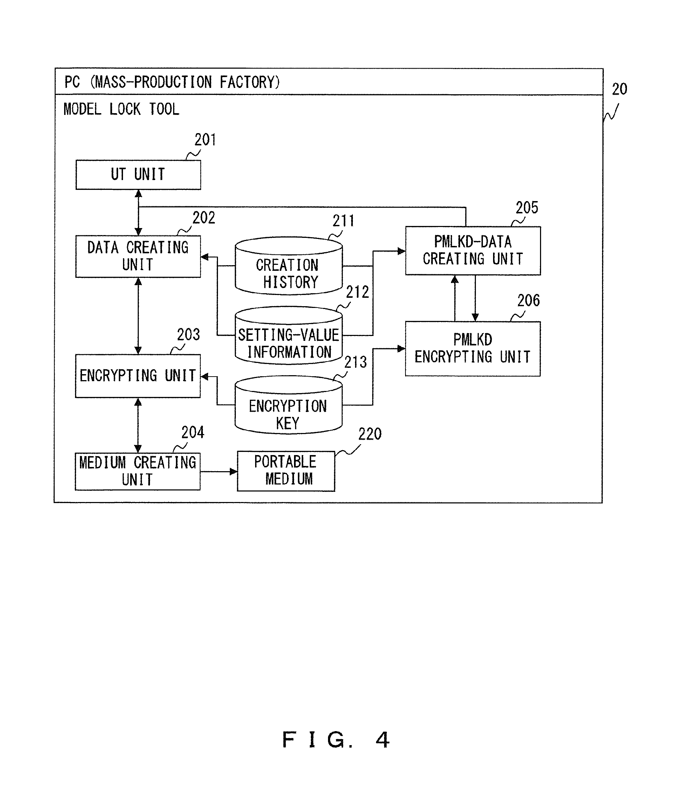

FIG. 4 illustrates an exemplary functional configuration of a setting-data encrypting apparatus in accordance with the embodiment. Next, with reference to FIG. 4, descriptions will be given in detail of a setting-data encrypting apparatus in accordance with the embodiment mounted on the terminal apparatus 20.

As illustrated in FIG. 4, the setting-data encrypting apparatus in accordance with the embodiment includes a UI (User Interface) unit 201, a data creating unit 202, an encrypting unit 203, a medium creating unit 204, a PMLKD-data creating unit 205, and a PMLKD encrypting unit 206. The data creating unit 202, the encrypting unit 203, and the medium creating unit 204 are functions to record encrypted model lock data in a portable recording medium 220 (indicated as a "portable medium" in FIG. 4, and such an expression will be used hereinafter). Note that the expression "create the portable medium 220" will hereinafter mean recording encrypted model lock data in the portable medium 220. The PMLKD-data creating unit 205 and the PMLKD encrypting unit 206 are functions for creating and outputting a PMLKD 2.

The UI unit 201 is a function to create a screen presented to an operator who operates the terminal apparatus 20 and to allow the operator to input data (including, in this example, various instructions and so on). And the UI unit 201 obtains the input data. The UI unit 201 first displays a selection screen to allow the operator to select an object to be created. As a result of the selection, one of the portable medium 220 or the PMLKD 2 is specified as an object to be created. Then, the UI unit 201 causes the operator to input data that depends on the result of the selection.

Data is input in the order of, for example, the inputting of the serial ID of a CL apparatus 30 for which a setting is to be changed → the inputting of setting-value data. A creation history database (DB) 211 stores, for each CL apparatus 30, setting-value data input in the past. A serial ID is data for unique identification of a CL apparatus 30. In the embodiment, a serial ID is initially input so that the operator can check setting-value data input in the past.

When the operator selects creation of a PMLKD 2, the UI unit 201 displays an entry screen to allow the operator to input a serial ID. The serial ID input by the operator using the entry screen is reported from the UI unit 201 to the PMLKD-data creating unit 205. The serial ID is saved as an encryption key 213.

The PMLKD-data creating unit 205 searches the creation history DB 211 using the reported serial ID as a key and, for each model lock word, extracts the most recently designated setting value and a creation date. The model lock words include those that have been changed due to a creation of a portable medium 220, so that the operator can check the current setting value of each model lock word.

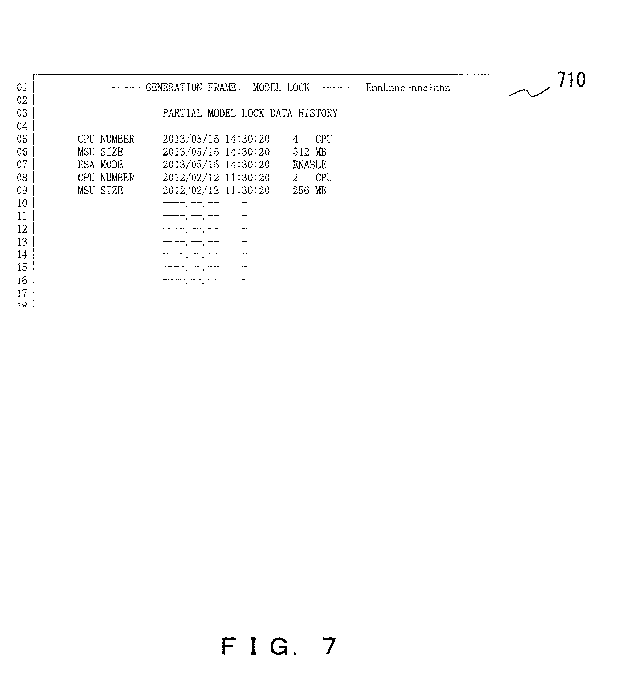

The pieces of extracted data are reported from the PMLKD-data creating unit 205 to the UI unit 201, which displays a setting-value entry screen in which the pieces of reported data are arranged in a time sequence. The history displayed on the screen is the one depicted in FIG. 7.

FIG. 7 illustrates a change-history screen 701 indicating the history of a setting change made in the past by the CL apparatus 30. For each model lock word for which a setting value has been changed, the change-history screen 701 includes a character string indicating the class of the model lock word, setting-value data, and a date on which a setting was changed (including time, in this example). The character-string expressions "CPU NUMBER", "MSU SIZE", and "ESA MODE" respectively indicate the number of CPUS, the capacity of a main storage, and an ESA (Enterprise Service Architecture) mode. As an example, "4 CPU" means four CPUs, and "512 MB" means that a main storage has a capacity of 512MB. ESA is a specification that supports all principal functions of SOA (Service Oriented Architecture), and "ENABLE", indicated as a setting value of the ESA mode, means that the ESA mode has been enabled.

The setting-value entry screen also displays, for each model lock word, a list of a character string indicating a model-lock-word class, a setting value, and a date. Accordingly, while checking current settings, the operator selects a model lock word for which a setting is to be changed, and inputs the setting value. The selected model lock word and the input setting value are reported from the UI unit 201 to the PMLKD-data creating unit 205 when, for example, the operator indicates the end of the inputting.

Some model lock words have a setting value that is to be determined in accordance with the setting value of another model lock word. To achieve, for example, a higher performance, it is desirable to set a larger number as the number of CPUs and to set a larger capacity as the capacity of the main storage. Accordingly, a situation in which a maximum number is set as the number of CPUs and, simultaneously, a minimum capacity is set as the capacity of the main storage, is likely to be contrary to the user's intentions. Accordingly, in the embodiment, setting-value information 212 is prepared to determine whether a setting value input by a model lock word of a class selected by the operator is valid.

When the UI unit 201 reports a selected model lock word and an input setting value, the PMLKD-data creating unit 205 refers to setting-value information 212 and determines whether the setting value input by the model lock word is valid. Determining that the setting value is invalid, the PMLKD-data creating unit 205 reports this fact to the UI unit 201. In response to the report, the UI unit 201 displays a setting entry screen that, for example, includes a message to urge the operator to check the input information. This at least disables the inputting of a setting value judged to be invalid.

When determining that setting values are valid, the PMLKD-data creating unit 205 reports, for each model lock word, a class and a setting value thereof to the PMLKD encrypting unit 206. In response to the report, using a serial ID as an encryption key, the PMLKD encrypting unit 206 gathers and encrypts, for each model lock word, a setting value and class data indicating the class of the model lock word. A PMLKD, i. e. , encrypted data obtained via the encrypting, is reported to the UI unit 201 via the PMLKD-data creating unit 205.

The UI unit 201 displays a reported PMLKD in a character string format. This allows the operator to convey the displayed PMLKD 2 to another operator at the customer' s site using various electronic transmission techniques such as e-mail, telephone, and facsimile.

When the operator selects the creation of a portable medium 220 on a selection screen displayed by the UI unit 201, the UI unit 201 displays an entry screen to allow the operator to input the serial number of a CL apparatus 30 for which a setting is to be changed. The UI unit 201 reports, to the data creating unit 202, the serial ID input on the entry screen by the user. The serial ID is saved as an encryption key 213.

Using the reported serial ID as a key, the data creating unit 202 searches the creation history DB 211 and extracts, for each model lock word for which a PMLKD 2 was created in the past or for which a setting value was changed in the past, a model-lock-word class data, a setting value, and a creation date. Those pieces of extracted data are reported from the data creating unit 202 to the UI unit 201, which displays a setting-value entry screen in which the pieces of reported data are arranged.

While checking current settings, the operator selects a model lock word for which a setting is to be changed, and inputs the setting value. The selected model lock word and the input setting value are reported from the UI unit 201 to the data creating unit 202 when, for example, the operator indicates the end of the inputting.

As with the PMLKD-data creating unit 205, the data creating unit 202 refers to setting-value information 212 to determine, for each selected model lock word, whether an input setting value is valid. When a model lock word is judged to be invalid, the data creating unit 202 reports this fact to the UI unit 201. In response to the report, the UI unit 201 displays a setting entry screen that, for example, includes a message to urge the operator to check input information. This at least invalidates the inputting of a setting value judged to be invalid.

When determining that setting values are valid, the data creating unit 202 reports, for each model lock word, a class and a setting value thereof to the encrypting unit 203. For a model lock word for which the operator has not input a setting value, a latest setting value stored in the creation history DB 211 is reported to the encrypting unit 206. Accordingly, using a serial ID as an encryption key, the encrypting unit 203 gathers and encrypts the setting values of all of the model lock words, i.e., pieces of model lock data. The encrypted data (model lock data) obtained via the encrypting is reported to the medium creating unit 204.

The medium creating unit 204 writes, to a portable medium 220 set up by the operator, the encrypted data reported from the encrypting unit 203. After writing the encrypted data, the medium creating unit 204 reports this fact to the encrypting unit 203.

In response to the report, the encrypting unit 203 reports to the data creating unit 202 data indicating the completion of the encrypting. Upon receipt of the report, the data creating unit 202 reports to the UI unit 201 the completion of the creating of the portable medium 220. In response to the report, the UI unit 201 displays a screen for reporting the completion of the creating of the portable medium 220 to the operator.

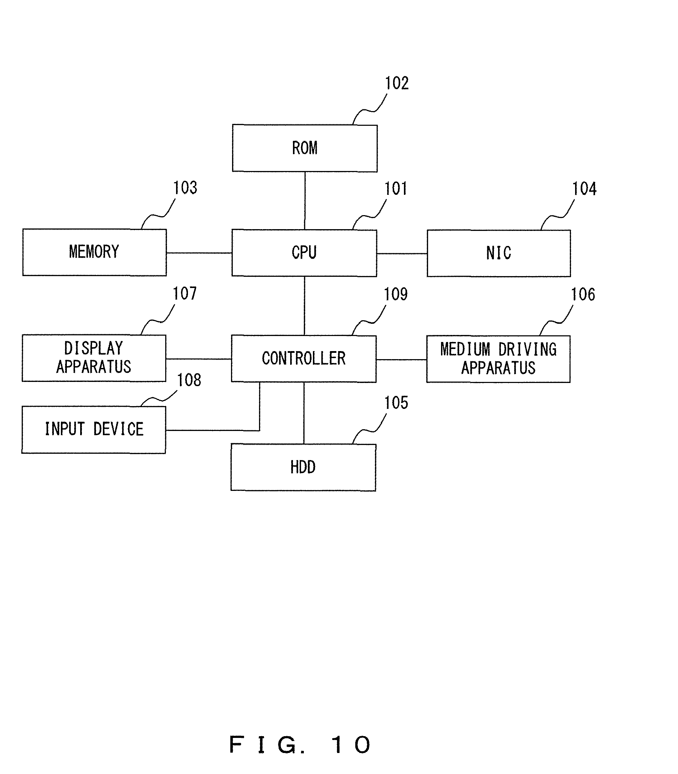

FIG. 10 illustrates an exemplary configuration of an information processing apparatus usable as a setting-data encrypting apparatus in accordance with the embodiment. Referring to FIG. 10, the following will specifically describe an exemplary configuration of the setting-data encrypting apparatus in accordance with the embodiment, i.e., an information processing apparatus usable as the terminal apparatus 20 used at a mass-production factory.

As depicted in FIG. 10, the information processing apparatus includes a CPU 101, a ROM 102, a memory (memory module) 103, an NIC (Network Interface Card) 104, a hard disk apparatus (HD) 105, a medium driving apparatus 106, a display apparatus 107, an input device 108, and a controller 109. This configuration is an exemplary information processing apparatus usable as the terminal apparatus 20, and the configuration of the information processing apparatus that achieves the setting-data encrypting apparatus in accordance with the embodiment is not limited to the one depicted in FIG. 10.

The ROM 102 is a memory that stores a BIOS (Basic Input/Output System). The CPU 101 loads the BIOS into the memory 103 to execute this system. The hard disk apparatus 105 stores an OS (Operating System) and various programs that include a model lock tool operated on the OS (e.g., an application program, which will hereinafter be referred to as an "application"). After the activation of the BIOS is completed, using the controller 109, the CPU 101 may read from the hard disk apparatus 105 the OS and various programs to be executed, and may load the OS and the various programs into the memory 103 to execute them. Activation of the BIOS or the OS enables a communication to be performed via the NIC 104.

The NIC 104 enables a communication to be performed via a network such as a LAN (Local Area Network). An electronic transmission of information on a PMLKD 2 relayed via e-mail, telephone, facsimile, or the like can be performed using the NIC 104.

The medium driving apparatus 106, the display apparatus 107, and the input device 108 are connected to the controller 109 together with the hard disk apparatus 105. Via the controller 109, the CPU 101 controls the medium driving apparatus 106, displays information on the display apparatus 107, and recognizes an operation performed using the input device 108. All of the medium driving apparatus 106, the display apparatus 107, and the input device 108 may be detachable elements.

The medium driving apparatus 106 is accessible to the portable medium 220. The display apparatus 107 is used to display various screens. The input device 108, which includes, for example, a keyboard and a pointing device, enables the inputting of various pieces of data and allows various instructions to be given.

As described above, a model lock tool is an application operated on, for example, an OS. The model lock tool is stored in the hard disk apparatus 105. The creation history DB 211 and setting-value information 212 are also saved in, for example, the hard disk apparatus 105. The encryption key 213 is saved in the memory 103. In such a situation, the UI unit 201 is achieved by the CPU 101, the ROM 102, the memory 103, the hard disk apparatus 105, the display apparatus 107, the input device 108, and the controller 109.

The data creating unit 202, the encrypting unit 203, the PMLKD-data creating unit 205, and the PMLKD encrypting unit 206, are achieved by the CPU 101, the ROM 102, the memory 103, the hard disk apparatus 105, and the controller 109. The medium creating unit 204 is achieved by the CPU 101, the ROM 102, the memory 103, the hard disk apparatus 105, the medium driving apparatus 106, and the controller 109.

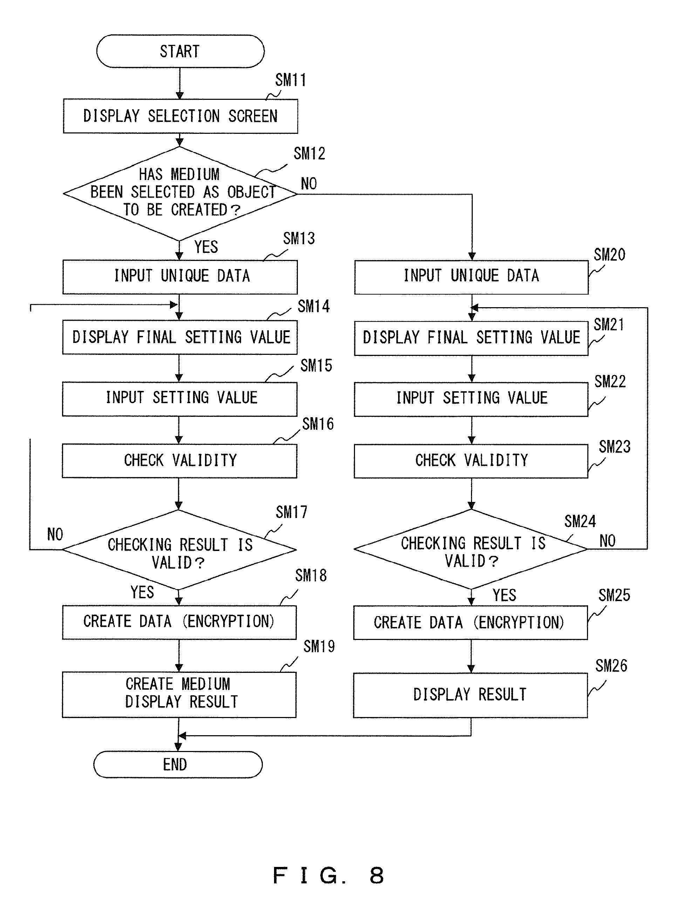

FIG. 8 is a flowchart of a data creating process. The data creating process is achieved by executing the aforementioned model lock tool, and the portable medium 220 and a PMLKD 2 are created by the data creating process. FIG. 8 depicts a flow from activation to creation of the portable medium 220 or a PMLKD 2. With reference to FIG. 8, the following will describe the data creating process in detail. Assume that the configuration of the terminal apparatus 20 that performs the data creating process is the one depicted in FIG. 10.

First, the CPU 101 causes the display apparatus 107 to display a selection screen (SM11). Then, using the controller 109, the CPU 101 monitors an operation performed on the input device 108 by the operator so as to determine whether a portable medium 220 is selected as an object to be created (SM12). When the operator chooses to create the portable medium 220, a judgment of YES is indicated in SM12, shifting the flow to SM13. When the operator chooses to create a PMLKD 2, a judgment of NO is indicated in SM12, shifting the flow to SM20.

In SM13, the CPU 101 causes the display apparatus 107 to display a screen for allowing the operator to input a serial ID. The operator operates the input device 108 to input a serial ID and indicates the completion of the inputting, and, responsively, the CPU 101 searches the creation history DB 211 using the serial ID as a key and extracts a complete set of model lock data after the final data creation (SM14). The CPU 101 causes the display apparatus 107 to display a setting-value entry screen indicating the complete set of model lock data that has been extracted (SM14).

Using the input device 108, the operator selects a model lock word for which a setting value is to be changed within the displayed model lock data, and inputs a new setting value. Using the controller 109, the CPU 101 monitors the operation performed on the input device 108 by the operator and inputs the setting value (SM15). When the operator indicates the completion of the inputting of a setting value, the CPU 101 refers to setting-value information 212 to check the validity of a setting value input for each model lock word by the operator (SM16). After the checking, the flow shifts to SM17.

In SM17, the CPU 101 determines whether the result of the checking is valid. When all of the setting values input by the operator are judged to be valid, a judgment of YES is indicated in SM17, shifting the flow to SM18. When any of the setting values input by the operator is judged to be invalid, a judgment of NO is indicated in SM17, returning the flow to SM14. Then, the operator inputs a setting value again. In the displaying of setting values in SM14 after the returning, setting values input by the operator may be displayed while highlighting a setting value estimated to be inappropriate.

In SM18, using the input serial ID as the encryption key 213, the CPU 101 gathers and encrypts the setting values on the setting-value entry screen. Using the controller 109, the CPU 101 outputs encrypted model lock data obtained via the encrypting to the medium driving apparatus 106 and stores the encrypted data in the portable medium 220 set up at the medium driving apparatus 106 (SM19). In addition, using the controller 109, the CPU 101 stores, together with the current time and date, the encrypted model lock data in the creation history DB 211 configured on the hard disk apparatus 105 (SM19) . Subsequently, using the controller 109, the CPU 101 causes the display apparatus 107 to display information indicating that the creation of the portable medium 220 has been successfully finished (SM19). After the result is displayed in this manner, the data creating process is finished.

In SM20, i. e. , a step to which the flow shifts when a judgment of NO is indicted in SM12, the CPU 101 causes the display apparatus 107 to display a screen for allowing the operator to input a serial ID. The operator operates the input device 108 to input a serial ID and indicates the completion of the inputting, and, responsively, the CPU 101 searches the creation history DB 211 using the serial ID as a key and extracts a complete set of currently enabled model lock data (SM21). The CPU 101 causes the display apparatus 107 to display a setting-value entry screen indicating the complete set of model lock data that has been extracted (SM21).

With the setting-value entry screen, the operator selects a model lock word for which a setting value is to be input, and inputs the setting value. Using the controller 109, the CPU 101 monitors the operation performed on the input device 108 by the operator and enables the selecting of a model lock word and the inputting of a setting value (SM22). When the operator indicates the completion of the inputting of a setting value, the CPU 101 refers to setting-value information 212 to check the validity of a setting value input for each model lock word selected by the operator (SM23). After the checking, the flow shifts to SM24.

In SM24, the CPU 101 determines whether the result of the checking is valid. When all of the setting values input by the operator are judged to be valid, a judgment of YES is indicated in SM24, shifting the flow to SM25. When any of the setting values input by the operator is judged to be invalid, a judgment of NO is indicated in SM24, returning the flow to SM21. Then, the operator inputs a setting value again. In the displaying of setting values in SM21 after the returning, a setting value estimated to be inappropriate may be deleted, and the inputting of a new setting value may be demanded.

In SM25, using the input serial ID as the encryption key 213, the CPU 101 gathers and encrypts model-lock-word class data and a setting value for each model lock word selected on the setting-value entry screen (SM25). Using the controller 109, the CPU 101 causes the display apparatus 107 to display, for example, the PMLKD 2 obtained via the encrypting and a message reporting that the creation of the PMLKD 2 has been successfully finished (SM25). In addition, using the controller 109, for each encrypted model lock word, the CPU 101 stores, together with the current time and date, model-lock-word class data and a setting value in the creation history DB 211 configured on the hard disk apparatus 108 (SM25). Then, the data creating process is finished.

As described above, in the embodiment, a portable medium 220 or a PMLKD 2 is created in accordance with the operator's selection. This aims to allow the operator to choose the better option in accordance with the situation.

The following will specifically describe the CL apparatus 30.

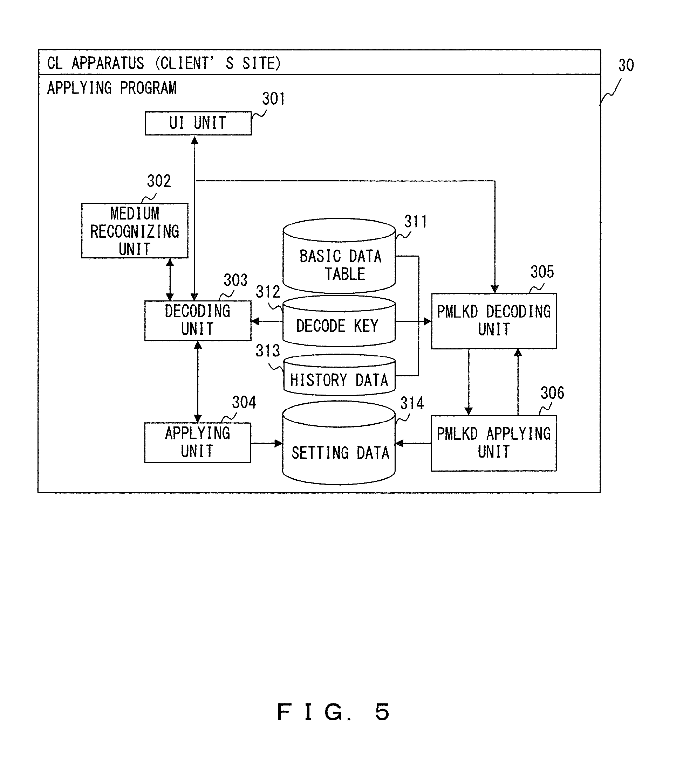

FIG. 5 illustrates an exemplary functional configuration of a CL apparatus that is an information processing apparatus in accordance with the embodiment. As depicted in FIG. 5, the CL apparatus 30 includes a UI unit 301, a medium recognizing unit 302, a decoding unit 303, and an applying unit 304, a PMLKD decoding unit 305, and a PMLKD applying unit 306.

The UI unit 301 is a function to create a screen presented to an operator who operates the CL apparatus 30 and to allow the operator to input data (including various instructions and so on, in this example). And the UI unit 301 obtains the input data. The medium recognizing unit 302, the decoding unit 303, and the applying unit 304 are functions to enable a setting change that depends on the portable medium 220, and the PMLKD decoding unit 305 and the PMLKD applying unit 306 are functions to enable a setting change that depends on a manually input PMLKD 2. The UI unit 201 first displays a selection screen to allow the operator to select the type of data to be input to the CL apparatus 30. The options are model lock data and a PMLKD 2, both stored in the portable medium 220.

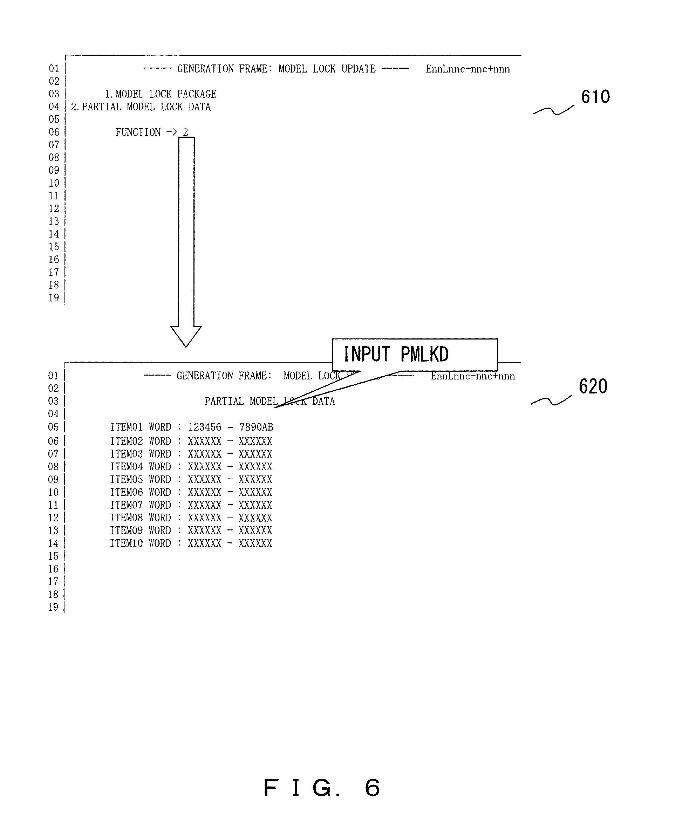

FIG. 6 illustrates examples of a selection screen and a PMLKD entry screen, both displayed by a CL apparatus.

As depicted in FIG. 6, in a selection screen 610, the type of data to be input is selected by inputting value "1" or "2". The character string "1. MODEL LOCK PACKAGE" on the selection screen 610 indicates that "1" is to be input when it is desirable to input data using the portable medium 220. The character string "2. PARTIAL MODEL LOCK DATA" indicates that "2" is to be input when it is desirable to manually input a PMLKD 2.

When the operator inputs "2" and orders execution on the selection screen 610, the UI unit 301 displays a PMLKD entry screen 620 as depicted in FIG. 7. The portion that follows the character string "ITEM01 WORD:" on the PMLKD entry screen 620 is an area in which a PMLKD 2 is input, and "123456" and "7890AB" in "123456-7890AB" indicate the actually input PMLKDs 2. In the PMLKD entry screen 620 in FIG. 7, the portions that follow the character strings other than the character string "ITEM01 WORD:", i.e., "ITEM02 WORD:" to "ITEM10 WORD:", are also areas in which PMLKDs 2 are input. "XXXXXX" and "XXXXXX" in "XXXXXX-XXXXXX" indicate that a PMLKD 2 has not been input. In accordance with an instruction from the operator, the PMLKD 2 input on the PMLKD entry screen 620 is reported from the UI unit 301 to the PMLKD decoding unit 305.

Upon receipt of the PMLKD 2, the PMLKD decoding unit 305 decodes the PMLKD 2 using the serial ID of this unit as a decode key 312. For each decoded PMLKD 2, the PMLKD decoding unit 305 reports to the UI unit 301 model-lock-word class data and a setting value obtained via the decoding.

As depicted in FIG. 1, a model lock word has a model ID. For each setting value settable as a model ID, the setting value of each model lock word is stored in a basic data table 311. When a decoded PMLKD 2 has a model lock ID as a model lock word, the PMLKD decoding unit 305 reports to the UI unit 301 the setting value of each corresponding model lock word in addition to, for example, the setting value of the model ID.

The UI unit 301 displays a model lock word and a setting value indicated by reported model-lock-word class data, and the operator checks the displayed information. Then, when the operator orders an application execution, the UI unit 301 reports this fact to the PMLKD decoding unit 305. When the operator orders re-inputting, the UI unit 301 displays the PMLKD entry screen 620 again. When the operator orders cancellation, the UI unit 301 displays, for example, the selection screen 610 again.

In response to the report of the application execution from the UI unit 301, for each decoded PMLKD 2, the PMLKD decoding unit 305 reports, to the PMLKD applying unit 306, model-lock-word class data and a setting value obtained via the decoding, and orders an application execution.

Model lock data, i.e. , the setting value of each model lock word, is saved as a portion of setting data 314. In response to the ordered application execution, the PMLKD applying unit 306 converts the setting value of a model lock word for which a setting value has been reported by the PMLKD decoding unit 305 into the reported setting value.

In response to the application execution reported from the UI unit 301, for each decoded PMLKD 2, the PMLKD decoding unit 305 stores, in a history database (DB) 313, model-lock-word class data and a setting value obtained via the decoding, together with the current time and date. The current time and date is stored in the history DB 313 as an application time and date of the setting change at that time.

Meanwhile, when the operator inputs "1" on the selection screen 610 and orders execution, the UI unit 301 makes a request for, for example, the decoding unit 303 to read data from the portable medium 220. At the request from the UI unit 301, the decoding unit 303 instructs the medium recognizing unit 302 to read data from the portable medium 220 that has been set. The medium recognizing unit 302 is a function to access the portable medium 220 that has been set. The medium recognizing unit 302 reads, in accordance with an instruction from the decoding unit 303, data from the portable medium 220 that has been set, and reports the read data to the decoding unit 303. The data read from the portable medium 220 is encrypted model lock data. When the portable medium 220 is not set up at the medium recognizing unit 302, this fact is reported via the decoding unit 303 to the UI unit 301, which displays a message that urges the portable medium 220 to be set up. After the message is displayed, when the operator orders reading, the UI unit 301 again instructs the decoding unit 303 to read data from the portable medium 220.

The decoding unit 303 uses the serial ID of the CL apparatus 30 as the decode key 312 so as to decode the encrypted data reported from the medium recognizing unit 302. The decoding unit 303 reports the model lock data obtained via the decoding to the UI unit 301.

The UI unit 301 displays the model lock data reported from the decoding unit 303, and the operator checks the displayed information. When the operator orders application after checking the information, the UI unit 301 instructs the decoding unit 303 to apply the model lock data, i.e., to change a setting.

In accordance with the application order from the UI unit 301, the decoding unit 303 reports the model lock data to the applying unit 304 and stores the model lock data in the history DB 313 together with the current time and date, i.e., the application time and date.

The applying unit 304 replaces model lock data of setting data 314 with the model lock data reported from the decoding unit 303. Then, the applying unit 304 reports to the decoding unit 303 that the applying has been completed.

The completion of the applying is reported to the UI unit 301 via the decoding unit 303. Receiving the report of the completion of the applying, the UI unit 301 reports this fact to the operator by, for example, displaying such a message.

In addition to setting values currently applied for model lock words, setting values that were applied in the past are stored in the history DB 313. Accordingly, the operator may instruct the UI unit 301 to display a change history screen 710 as depicted in FIG. 7. To display the change history screen 710, the decoding unit 303 instructs, for example, the PMLKD decoding unit 305 to read data stored in the history DB 313.

The displayed change history screen 710 may be used to restore settings. The embodiment offers a higher convenience by enabling a change to be made so as to return to a setting without using, for example, the portable medium 220.

A change for restoring a setting may be made, for example, by designating a line on the change history screen 710 in which a setting value to be returned to is located and by ordering the setting change. Making such a setting change based on the returning of a setting value also updates setting data 314 and the history DB 313.

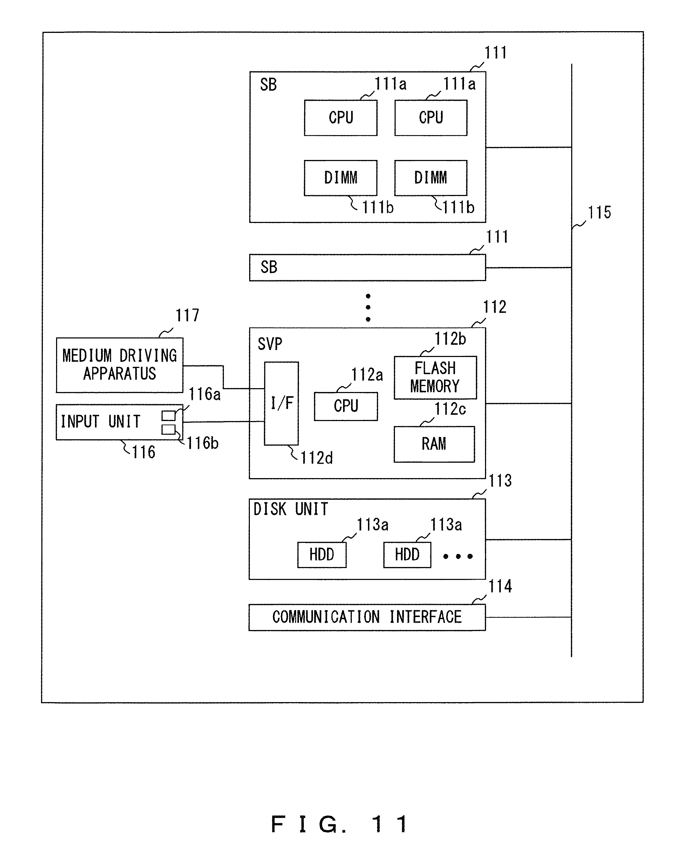

FIG. 11 illustrates an exemplary configuration of a CL apparatus that is an information processing apparatus in accordance with the embodiment. With reference to FIG. 11, the following will specifically describe an exemplary configuration of the CL apparatus 30.

As illustrated in FIG. 11, the CL apparatus 30 includes a plurality of system boards (SBs) 111, a service processor (SVP) 112, a disk unit 113, a communication interface 114, a bus 115, an input unit 116, and a medium driving apparatus 117. The SBs 111, the SVP 112, the disk unit 113, and the communication interface 114 are connected to the bus 115.

Each of the SBs 111 is a processing module to allow the CL apparatus 30 to perform data processing and is mounted with a plurality of CPUs 111a and a plurality of DIMMs (Dual Inline Memory Modules) 111b. Settings of "number of CPUs" and "capacity of main storage apparatus", i.e., model lock words, designate, for example, the number of SBs 111 actually operated from among all of the SBs 111. Alternatively, the settings designate the number of CPUs 111a actually operated and the number of DIMMs 111b used within each SB 111 or designate the capacity of the DIMMs.

The disk unit 113 is a module used to store various programs executed by each SB 111 and data used by each SB 111. The disk unit 113 is mounted with a plurality of hard disk apparatuses 113a as storage apparatuses.

The communication interface 114 includes a plurality of communication ports to establish a connection to, for example, a network, and enables a communication with the network via each communication port. Each SB 111 may communicate with the network via the communication interface 114.

The SVP 112, which is a module to manage the entirety of the CL apparatus 30, functions as one information processing apparatus. The SVP 112 includes a CPU 112a, a flash memory 112b, a RAM (Read Only Memory) 112c, and an interface (I/F) 112d.

The input unit 116 and the medium driving apparatus 117 are connected to the interface 112d. This allows the CPU 112a to control the input unit 116 and the medium driving apparatus 117 via the interface 112d.

The medium driving apparatus 117 is accessible to the portable medium 220. The input unit 116, which is used by the operator to input data and give various instructions, includes a display unit 116a and an operation unit 116b. The display unit 116a displays various screens such as the selection screen 610 and the PMLKD entry screen 620 depicted in FIG. 6 and the change history screen 710 depicted in FIG. 7. The operation unit 116b includes various keys and so on, and a PMLKD 2 is input by operating the operation unit 116.

The UI unit 301, the medium recognizing unit 302, the decoding unit 303, the applying unit 304, the PMLKD decoding unit 305, and the PMLKD applying unit 306 depicted in FIG. 5 are achieved by the SVP 112, the input unit 116, and the medium driving apparatus 117. The creation history DB 211 is provided. The history DB 313 is configured in, for example, the flash memory 112b. The flash memory 112b also stores the basic data table 311, the decode key (serial ID) 312, and setting data 314.

To activate, for example, the SB 111, the CPU 112a of the SVP 112 controls the activation of the SB 111 in accordance with setting data 314 and gives instructions on various settings. This reflects the settings based on setting data 314 in the CL apparatus 30.

The flash memory 112b stores a PMLKD 2 or a program for a setting change to be made by the portable medium 220 (hereinafter referred to as "applying program"). The elements 301-306 depicted in FIG. 5 are executed via the CPU 112a loading the applying program stored in the flash memory 112b into the RAM 112c. On the assumption that the applying program is executed by being read from the flash memory 112b and loaded into the RAM 112c, the UI unit 301 is achieved by the CPU 112a, the flash memory 112b, the RAM 112c, the interface 112d, and the input unit 116. The decoding unit 303, the applying unit 304, the PMLKD decoding unit 305, and the PMLKD applying unit 306 are achieved by the CPU 112a, the flash memory 112b, and the RAM 112c. The medium recognizing unit 302 is achieved by the CPU 112a, the flash memory 112b, the RAM 112c, the interface 112d, and the medium driving apparatus 117.

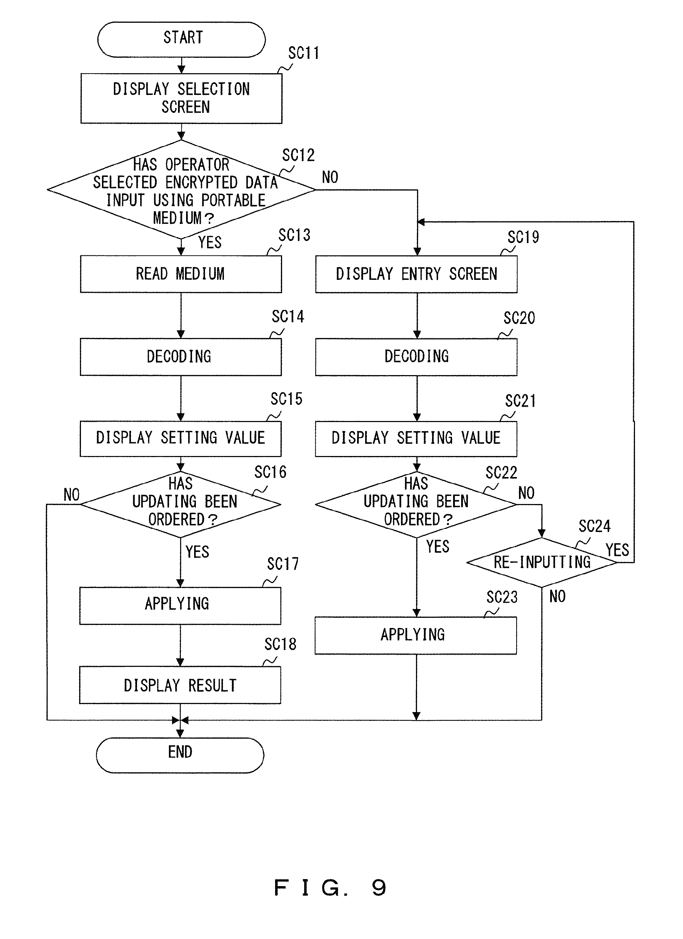

FIG. 9 is a flowchart of an updating process. The updating process is achieved by executing the aforementioned applying program, and setting changes made by the portable medium 220 and a PMLKD 2 are achieved by performing the updating process. For convenience, FIG. 9 does not indicate the portion related to a setting change made by displaying the change history screen 710. With reference to FIG. 9, the following will describe the updating process in detail. Assume that the configuration illustrated in FIG. 11 is the configuration of the CL apparatus 30 that performs the updating process. More particularly, assume that the applying program is executed by the CPU 112a of the SVP 112.

First, the CPU 112a causes the display apparatus 107 of the input unit 116 to display the selection screen 610 (SC11). Next, the CPU 112a monitors, via the interface 112d, an operation performed by the operator on the operation unit 116b of the input unit 116 and determines whether the type of data selected by the operator is model lock data, i.e., encrypted data input using the portable medium 220 (SC12). When the operator inputs "1" on the selection screen 610 and orders execution, a judgment of YES is indicated in SC12, shifting the flow to SC13. When the operator inputs "2" on the selection screen 610 and orders execution, a judgment of NO is indicated in SC12, shifting the flow to SC19.

In SC13-SC18, a process is performed for achieving a setting change using the portable medium 220.

First, in SC13, via the interface 112d, the CPU 112a instructs the medium driving apparatus 117 to read encrypted data stored in the portable medium 220 that has been set up. Next, using a serial ID as the decode key 312, the CPU 112a decodes the encrypted data read from the portable medium 220 (SC14). Then, the CPU 112a causes the display unit 116a of the input unit 116 to display model lock data obtained via the decoding, i.e., the setting value of each model lock word (SC15).

The operator checks details of the model lock data displayed on the display unit 116a and, if appropriate, orders updating. The CPU 112a performs monitoring via the interface 112d so as to determine whether the operator operates the operation unit 116b of the input unit 116 to order updating (SC16). When the operator performs an operation to order updating, a judgment of YES is indicated in SC16, shifting the flow to SC17. When the operator orders cancellation of updating, a judgment of NO is indicated in SC16, shifting the flow to SC18.

In SC17, the CPU 112a overwrites model lock data within setting data 314 stored in the flash memory 112b with the decoded model lock data. The CPU 112a stores the decoded model lock data, together with the current time and date, in the history DB 313 configured in the flash memory 112b. The decoded model lock data is applied in this way, and the flow then shifts to SC18.

In SC18, the CPU 112a causes the display unit 116a of the input unit 116 to display the result of the applying. When model lock data is applied, i.e., when the flow shifts from SC17 to SC18, the CPU 112a causes the display unit 116a to display a screen to report to the operator that the applying has been appropriately finished. When model lock data is not applied, i.e., when the flow shifts from SC16 to SC18, the CPU 112a causes the display unit 116a to display a screen to report to the operator that a setting change was not made. Then, the updating process ends.

In SC19-SC24, i.e., steps to which the flow shifts when a judgment of NO is indicated in SC12, a process is performed for achieving a setting change by manually inputting a PMLKD 2.

First, in SC19, the CPU 112a causes the display unit 116a of the input unit 116 to display the PMLKD entry screen 620, and inputs a PMLKD 2 in accordance with the operator' s operation on the operation unit 116b. When the operator indicates the end of the inputting by operating the operation unit 116b, the CPU 112a decodes the input PMLKD 2 using a serial ID as the decode key 312 (SC20). For each model lock word represented by decoded model-lock-word class data, the CPU 112a causes the display unit 116a of the input unit 116 to display a decoded setting value (SC21).

The operator checks a setting value displayed for each model lock word on the display unit 116a and, if appropriate, orders updating. The CPU 112a performs monitoring via the interface 112d so as to determine whether the operator operates the operation unit 116b of the input unit 116 to order updating (SC22). When the operator performs an operation to order updating, a judgment of YES is indicated in SC22, shifting the flow to SC23. When the operator does not perform an operation to order updating, a judgment of NO is indicated in SC22, shifting the flow to SC24.

In SC23, the CPU 112a overwrites any of the setting values of the model lock words within setting data 314 stored in the flash memory 112b with the decoded setting value of a model lock word obtained by decoding the model-lock-word class data. The CPU 112a stores the setting value of the model lock word obtained by decoding the model-lock-word class data in the history DB 313 configured in the flash memory 112b, together with the current time and date. The setting change based on a PMLKD 2 is made in this way, and the flow then shifts to SC18.

In SC24, the CPU 112a performs monitoring via the interface 112d so as to determine whether the operator operates the operation unit 116b of the input unit 116 to order re-inputting (SC24). When the operator performs an operation to order re-inputting, a judgment of YES is indicated in SC24, shifting the flow to SC19, where the display unit 116a displays the PMLKD entry screen 620 again. When the operator orders neither updating nor re-inputting, i.e., when the operator orders cancellation of updating, a judgment of NO is indicated in SC24, shifting the flow to SC18.

When the flow shifts from SC23 to SC18, the CPU 112a causes the display unit 116a to display a screen to report to the operator that the applying has been appropriately finished. When the flow shifts from SC24 to SC18, the CPU 112a causes the display unit 116a to display a screen to report to the operator that a setting change was not made. Then, the updating process ends.

As described above, in the embodiment, an instruction to re-input the PMLKD 2 can be given to an operator who checks the result of decoding. This is because, in the case of a manually input PMLKD 2, inputting may possibly be mistakenly performed. Although not particularly illustrated, the PMLKD entry screen presented when the flow returns to SC19 displays, for each input PMLKD 2, the class and the setting value of a model lock word, thereby allowing the operator to more easily identify a PMLKD 2 that has been mistakenly input.

In the embodiment, one PMLKD 2 is created for each model lock word, but one PMLKD 2 may be created for each set of a plurality of model lock words. An operator may select the classes of model lock words to be gathered and the number (combination) of the model lock words. A PMLKD 2 may be input not only in a manual manner but also using a scanner or the like. This is because a PMLKD 2 is transmittable using a facsimile or the like. With regard to the CL apparatus 30, in accordance with a data input function of the CL apparatus 30 or the form of data representation that the CL apparatus 30 can address, the operator may arbitrarily select the form of outputting a PMLKD 2.

## Claims

1. A setting-data encrypting apparatus(20) comprising:
an input unit (201) from which setting data which indicates a detail to be newly set to an information processing apparatus whose performance-related setting is to be changed is input;
an encrypting unit(203,206) configured to encrypt the setting data input via the input unit(201); and
an output unit(201) configured to output encrypted data in a character string format.

2. The setting-data encrypting apparatus(20) according to claim 1, wherein
unique information assigned to the information processing apparatus (30) is input from the input unit (201), and
the encrypting unit(203,206) encrypts the setting data using the input unique information as a common key that is also used in decoding.

3. The setting-data encrypting apparatus(20) according to claim 1 or 2, wherein
when the setting is changeable for each item,
an item to be newly set to the information processing apparatus is input from the input device(201), and
for each item, the encrypting unit(203,206) encrypts the setting data and class data indicating the item.

4. An information processing apparatus(30) comprising:
an input unit(301) from which encrypted data including an encrypted setting data which indicates a detail to be newly set to the information processing apparatus, the detail being used to change performance-related setting is input;
a decoding unit(303,305) configured to decode the encrypted data input via the input unit(301); and
an applying unit(304) configured to change the performance-related setting using the setting data decoded by the decoding unit(303,305).

5. The information processing apparatus(30) according to claim 4, comprising:
a storage unit(103) configured to store unique information assigned to the information processing apparatus(30), wherein
the decoding unit(303,305) decodes the input encrypted data using the unique information.

6. The information processing apparatus(30) according to claim 4 or 5, wherein
the encrypted data is obtained by gathering and encrypting the setting data and class data indicating an item for which setting is to be changed using the setting data,
the decoding unit(303,305) decodes the setting data and the class data for each piece of encrypted data, and
the applying unit(304) changes the setting of the item indicated by the class data by using the setting data decoded together with the class data.

7. A setting changing method comprising:
obtaining encrypted data including an encrypted setting data which indicates a detail to be newly set to the information processing apparatus, the detail being used to change performance-related setting in a character string format (SC13,SC19),
decode the encrypted data(SC14,SC20), and
change the setting using the setting data obtained via the decoding(SC16,SC22).

8. A setting-data encrypting program for causing an information processing apparatus to perform a process comprising:
obtaining(SC15,SC22) setting data which indicates a detail to be newly set to another information processing apparatus, the detail being used to change performance-related setting;
encrypting(SC18,SC25) the input setting data; and
outputting(SC19,SC26) encrypted data in a character string format.

9. A setting changing program for causing an information processing apparatus to perform a process comprising:
obtaining(SC13,SC19) encrypted data including an encrypted setting data which indicates a detail to be newly set to the information apparatus, the detail being used to change performance-related setting in a character string format;
decoding(SC14,SC20) the input encrypted data; and
changing(SC16,SC22) the setting using the setting data obtained via the decoding.
